Europäisches Patentamt

European Patent Office

Office européen des brevets

(19)

(11) Veröffentlichungsnummer: **0 229 973 B1**

(12) **EUROPÄISCHE PATENTSCHRIFT**

(45) Veröffentlichungstag der Patentschrift: 29.05.91

(51) Int. Cl.⁵: **B62J 7/04**

(21) Anmeldenummer: 86117110.6

(22) Anmeldetag: 09.12.86

(54) **Befestigungseinrichtung zum Anbringen eines Fahrradgepäckträgers.**

(30) Priorität: 18.01.86 DE 3601387

(43) Veröffentlichungstag der Anmeldung:
29.07.87 Patentblatt 87/31

(45) Bekanntmachung des Hinweises auf die
Patenterteilung:
29.05.91 Patentblatt 91/22

(84) Benannte Vertragsstaaten:
AT BE CH DE ES FR GB IT LI LU NL SE

(56) Entgegenhaltungen:
DE-A- 3 505 692
US-A- 4 191 393
US-A- 4 350 361
US-A- 4 383 625

(73) Patentinhaber: ESGE-Marby GmbH + Co. KG.
Braker Strasse 1
W-4800 Bielefeld 16(DE)

(72) Erfinder: Belka, Heinrich
Uchteweg 3
W-4800 Bielefeld 11(DE)

(74) Vertreter: Rüger, Rudolf, Dr.-Ing. et al
Webergasse 3 Postfach 348
W-7300 Esslingen/Neckar(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung geht aus von einer Befestigungseinrichtung zum Verbinden eines Fahrradgepäckträgers mit einem Fahrzeugrahmen eines Fahrrades gemäß dem Oberbegriff des Anspruches 1.

Beispielsweise aus dem Buch "Fahrradtechnik" von Siegfried Rauch und Fritz Winkler sind zwei gattungsgemäße Arten der Anbringung eines Hinterradgepäckträgers an einem Fahrradrahmen bekannt. Bei der einen Ausführungsform sind die Längsstreben des Gepäckträgers an ihren vorderen Enden, bezogen auf die Fahrradgeometrie, abgeplattet und mit Bohrungen versehen, durch die im montierten Zustand die Klemmschraube der Sitzkopfmuffe hindurchführt. Bei der anderen Variante ist der die Gepäckauflagefläche bildende Rahmen des Gepäckträgers an seinem vorderen Ende durch eine Querstrebe geschlossen, wobei diese Querstrebe in ihrem mittleren Bereich abgeplattet ist und Schraubenlöcher enthält zur Anbringung an einer oberen Querstrebe, die zwischen den beiden Hintergabelstreben des Fahrradhinterbaus verläuft.

Nachteilig bei der ersten Ausführungsform sind die teilweise weit nach oben aufragenden Längsstreben, deren Abmessungen im übrigen exakt an die Fahrradgeometrie in diesem Bereich angepaßt sein müssen.

Jedoch ist der Abstand zu der Klemmschraube der Sitzkopfmuffe bei den einzelnen Fahrradrahmen größeren Schwankungen unterworfen, weshalb es schwierig oder unmöglich ist, einen für alle Fahrradtypen passenden Gepäckträger zu schaffen.

Die zweite Variante neigt, wie sich herausgestellt hat, zu Dauerbrüchen im Bereich der Abflachung, insbesondere im Übergangsbereich zu dem nicht abgeflachten Teil der quer verlaufenden Strebe, die häufig aus einem Runddraht besteht.

Aus der DE-A-430 384 ist eine schloßartige Haltevorrichtung zum lösbaren Anbringen eines Fahrradgepäckträgers bekannt. Die Haltevorrichtung besteht aus einem Gehäuse, das mittels einer Schraube und einer Beilagplatte an den Hintergabelstreben festgeklemmt wird und dort durch Reibschluß festgehalten werden soll. Im Inneren des Gehäuses sind zwei klinkenartige Schieber längsverschieblich geführt, die durch Federn in die vorgeschobene Stellung vorgespannt sind. In der vorgeschobenen Stellung ragen die beiden Schieber in eine an dem Gehäuse vorgesehene Nut, wobei ihre Schrägfläche von dem Grund der Nut weg weist. Hierdurch soll das Ansetzen des Gepäckträgers an dem Fahrrad vereinfacht werden, da der Gepäckträger lediglich mit seiner in der Nut aufzunehmenden Querstrebe in die Nut eingedrückt wird, wobei die Schrägflächen das Ausweichen der Riegel in das Gehäuse ermöglichen. Sobald die Querstrebe in die Nut des Gehäuses eingeführt ist, kehren die Riegel in ihre Ruhestellung zurück und verhindern ein Freikommen der Querstrebe des Gepäckträgers nach oben. Damit allerdings die Riegel in die Ruhestellung zurückkehren können, muß zwischen der Querstrebe des Gepäckträgerrahmensund den Riegeln ein Spiel vorhanden sein, das bei der Benutzung des Fahrrades zwangsläufig zu Klappergeräuschen führt, denn eine Verklemmung der Querstrebe in der Halterungsvorrichtung findet nicht statt.

Wegen der Schiebeführungen für die Riegel hat obendrein das Gehäuse beträchtliche Abmessungen und kragt entsprechend von den Hintergabelstreben aus. Um dennoch ein einigermaßen ansprechendes Aussehen zu bekommen, muß die Anlagefläche, mit der das Gehäuse an den Hintergabelstreben anliegt, so ausgerichtet sein, daß im montierten Zustand das Gehäuse in Verlängerung des Rahmens des Gepäckträgers verläuft. Hierdurch schränkt sich die Anwendung der Halterungsvorrichtung auf jeweils die Rahmengeometrie ein, für die es konstruiert ist.

Ausgehend hiervon ist es Aufgabe der Erfindung, eine Befestigungseinrichtung zum Verbinden eines Fahrradgepäckträgers mit einem Fahrradrahmen zu schaffen, bei der nicht die Gefahr von Dauerbrüchen besteht und die die Möglichkeit der Anpassung an verschiedene Fahrzeugrahmen gestattet.

Diese Aufgabe wird erfindungsgemäß durch die Befestigungseinrichtung mit den Merkmalen des Anspruches 1 gelöst.

Durch die Verwendung eines getrennten Klemmstückes, das einerseits an dem Fahrzeugrahmen und andererseits an dem Gepäckträger angebracht ist, besteht die Möglichkeit der modularen Anpassung einheitlicher Fahrradgepäckträger an unterschiedliche Geometrien von Fahrzeugrahmen. Außerdem braucht bei der Verwendung des getrennten Klemmstücks keine Materialschwächung an dem Fahrradgepäckträger im Bereich der Befestigungsstelle vorgesehen werden.

Wenn die Aufnahmeeinrichtung eine Nut enthält, die parallel zu der Strebe des Fahrzeugrahmens verläuft und in die die Strebe des Fahrzeugrahmens einlegbar ist, läßt sich die Befestigungseinrichtung auch ohne weiteres an Fahrzeugrahmen verwenden, die die weit verbreitete zylindrische Strebe zwischen den Hintergabelstreben enthält. Die Befestigungseinrichtung ist damit nicht auf Fahrräder mit Pletscher-Platte beschränkt. Außerdem können hierbei auch große Drehmomente um eine zu der Fahrradlängsachse parallele Achse aufgenommen werden, ohne daß sich das Klemmstück auf der Strebe mitdreht.

Die Aufnahmeeinrichtung kann plattenförmige Gestalt aufweisen und die Nut enthalten, womit sie sowohl in Verbindung mit zylindrischen Verbindungsstreben als auch mit flachen Pletscher-Platten anwendbar ist. Vorzugsweise enthält in diesem Falle das Klemmstück eine Querbohrung, die mit der zugehörigen Bohrung in der Strebe des Fahrzeugrahmens fluchtet und durch die im montierten Zustand eine entsprechende Befestigungsschraube hindurchführt.

Wenn das Klemmstück, vorzugsweise im Bereich der Aufnahmeeinrichtung, eine Fläche trägt, vereinfacht sich die Anbringung der Felgenbremse, der gleichzeitig eine größere Anlagefläche bereitgestellt wird. Die Fläche für die Felgenbremse liegt hierbei der Nut für die Strebe des Fahrzeugrahmens gegenüber.

Wenn der Gepäckträger aus einem Runddraht hergestellt ist, so daß die beiden Längsstreben einstückig durch die stirnseitige Querstrebe miteinander verbunden sind, enthält vorzugsweise das Klemmstück zwei zueinander parallele Schenkel, die zwischen sich eine längs der Breite des Klemmstücks verlaufende Nut begrenzen, die die Ausnehmung für die Strebe des Gepäckträgers bildet und die tiefer ist als die Erstreckung der eingelegten Strebe in Richtung auf den Nutengrund. Die Klemmittel sind dabei zwischen den freien Enden der Schenkel, die gleichzeitig den Nutenrand bilden und der eingelegten Strebe vorgesehen. Hierdurch läßt sich der Gepäckträger mit jedem Winkel zwischen der Gepäckauflagefläche und dem Klemmstück befestigen.

Die Klemmittel zur Sicherung des Gepäckträgers in dem Klemmstück können durch ein Paßstück gebildet sein, das in nutenförmige Ausnehmungen in der Nähe des Randes der beiden Nutenflanken eingesetzt ist und wenigstens eine in Richtung auf den Nutengrund weisende Gewindebohrung mit Klemmschraube enthält.

Um ein Aufweiten der Schenkel durch das eingesetzte Paßstück zu verhindern, trägt dieses seitliche hakenförmige Fortsätze, die seitlich um den Rand der Nut herum die Schenkel von außen greifen und die Schenkel in der entsprechenden Weise festhalten.

Eine andere Sicherungsmöglichkeit für den Gepäckträger in der Nut des Klemmstücks besteht darin, in den Schenkeln wenigstens zwei miteinander fluchtende Durchgangsöffnungen vorzusehen, in denen die Klemmittel sitzen, durch die der Gepäckträger an den Nutengrund anpreßbar ist. Hierbei sitzt vorteilhafterweise in der einen der wenigstens zwei miteinander fluchtenden Durchgangsöffnungen ein keil- oder konusförmiges Andruckstück, in das eine durch die andere der beiden Öffnungen eingeführte Anzugsschraube eingedrehtist, wobei das Andruckstück mit seinem verjüngten Ende voraus gegen den anderen Schenkel anziehbar ist. Ein konusförmiges Andruckstück drückt sich beim Anziehen geringfügig in das Material der Strebe des Gepäckträgers ein und sichert so die Strebe besonders gut gegen Verrutschen in Längsrichtung. Außerdem ist die Herstellung konusförmiger Andruckstücke, die runde Sitzöffnungen erfordern, besonders einfach.

Da die größte Kraft beim Gepäckträger üblicherweise in Richtung auf die haltende Querstrebe am Fahrzeugrahmen auftritt, öffnet sich die Nut vorzugsweise von der Querstrebe des Fahrzeugrahmens weg nach oben.

Zum Anbringen von Fahrradgepäckträgern, die an ihrem stirnseitigen Ende keine Querstrebe aufweisen, mit denen die beiden Längsstreben untereinander verbunden sind, lassen sich dadurch mit Hilfe des Klemmstücks an dem Fahrzeugrahmen anbringen, das in dem Klemmstück zwei parallelachsige Öffnungen angebracht sind, in die die Längsstrebe des Gepäckträgers einsteckbar sind. Die Klemmittel werden hier von zwei Klemmschrauben gebildet, die in zugehörige, die Öffnungen für die Längsstreben zumindest anschneidende Gewindebohrungen eindrehbar sind. Diese Ausführungsform hat außerdem den Vorzug, daß zum Justieren der Lage der Gepäckauflagefläche die Längsstreben ohne weiteres unterschiedlich tief in das Klemmstück eingeschoben werden können, womit sich eine Justagemöglichkeit ergibt.

Auch die Aufnahmeeinrichtung des Klemmstücks,mittels derer das Klemmstück an dem Fahrzeugrahmen angebracht ist, kann durch zwei zueinander parallele Schenkel gebildet sein, die eine Nut begrenzen, die sich längs der Breite des Klemmstücks erstreckt. Zur Anbringung von Gepäckträgern an deren Längsstreben enthält jeder der Schenkel zwei Öffnungen, wobei die Öffnungen in den Schenkeln paarweise miteinander fluchten und der Aufnahme der beiden Längsstreben des Gepäckträgers dienen. Hierbei läßt sich die Verklemmung durch Klemmschrauben erreichen, die in Gewindebohrungen eingesetzt sind, die durch den Grund der Nut verlaufen.

In der Zeichnung sind Ausführungsbeispiele des Gegenstandes der Erfindung dargestellt. Es zeigen:

Fig. 1    einen Hinterbau eines Fahrrades mit daran montiertem Gepäckträger in perspektivischer Darstellung,

Fig. 2    ein Klemmstück mit nach oben offener Nut zur Aufnahme der Querstrebe des Gepäckträgers nach Fig. 1, teilweise quer geschnitten und in perspektivischer Darstellung,

Fig. 3    ein Klemmstück zur Anbringung des Gepäckträgers nach Fig. 1 in einem Querschnitt,

Fig. 4 einen Gepäckträger in perspektivischer Darstellung mit über seine Stirnseite hinausragenden Längsstreben,

Fig. 5 ein Klemmstück zur Anbringung des Gepäckträgers nach Fig. 4 in perspektivischer Darstellung und teilweise geschnitten und

Fig. 6 ein weiteres Ausführungsbeispiel eines Klemmstücks zur Anbringung des Gepäckträgers nach Fig. 4 bei Verwendung einer plattenförmigen Strebe zwischen den beiden Hintergabelstreben eines Fahrrades.

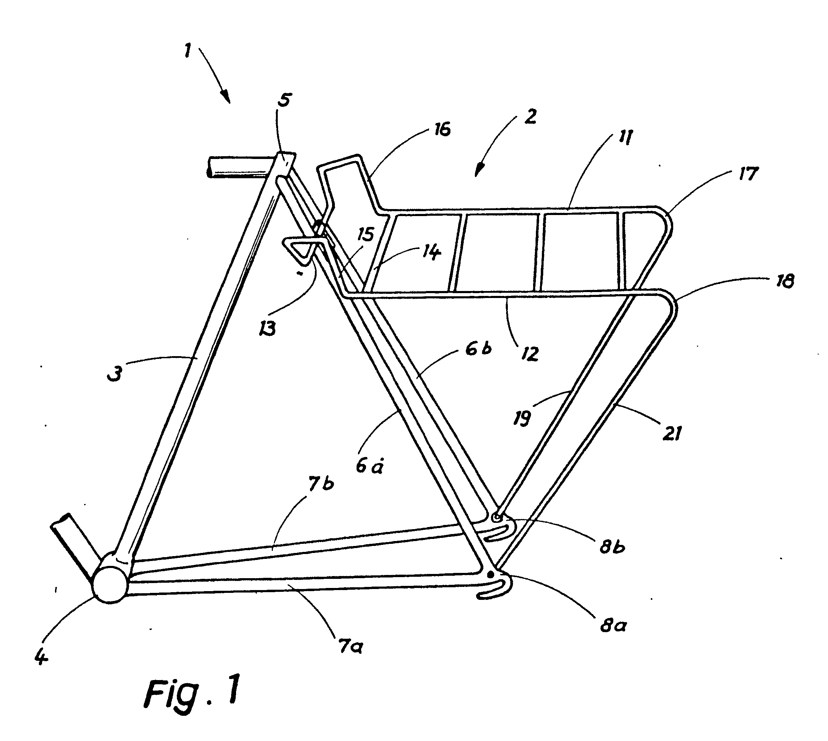

Fig. 1 zeigt schematisch einen Hinterbau 1 eines Fahrrades, an dem ein Gepäckträger 2 angebracht ist. Der Hinterbau 1 wird gebildet von einem Sattelrohr 3, an dessen unterem Ende ein Tretlagergehäuse 4 angebracht ist und dessen oberes Ende eine Sitzkopfmuffe 5 trägt, von der schräg nach unten zwei Hintergabelstrebel 6a und 6b abgehen. Die freien unteren Enden der beiden Hintergabelstreben 6a und 6b sind mit Hintergabelrohren 7a und 7b verbunden, die etwa horizontal verlaufen. Die den Hintergabelstreben 6a und 6b abliegenden Enden der Hintergabelrohre 7a und 7b sind an dem Tretlagergehäuse 4 angebracht, um die Hintergabelstreben dagegen abzustützen. An der Verbindungsstelle zwischen den Hintergabelrohren 7a und 7b mit den Hintergabelstreben 6a und 6b befinden sich Ausfallenden 8a und 8b, an denen die Achse eines nicht veranschaulichten Hinterrades zu befestigen ist.

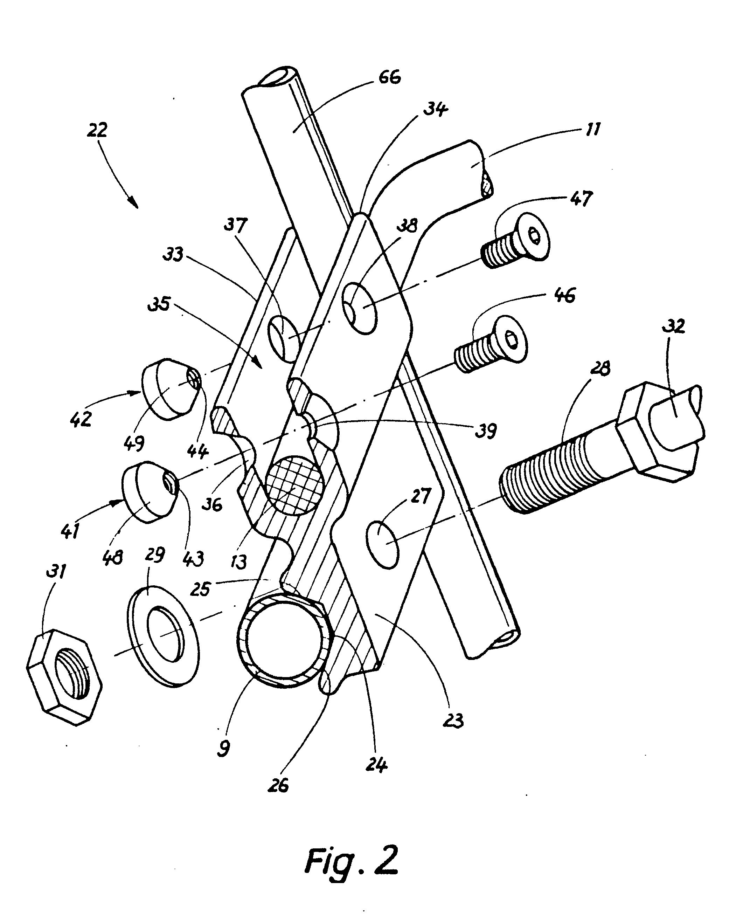

Nahe der Sitzkopfmuffe 5 sind die beiden Hintergabelstreben 6a und 6b durch eine Querstrebe 9 untereinander verbunden (siehe hierzu Fig. 2), die in bekannter Weise der Halterung einer nicht gezeigten Felgenbremse sowie der Anbringung des Gepäckträgers 2 dient.

Der Gepäckträger 2 enthält eine Gepäckauflagefläche, die von einem Rahmen, bestehend aus zwei Längsstreben 11, 12 sowie einer Querstrebe 13 begrenzt ist. Die beiden parallel zueinander verlaufenden Längsstreben 11 und 12 verlaufen im montierten Zustand bis in die Nähe der beiden Hintergabelstreben 6a und 6b etwa parallel zueinander sowie horizontal und sind durch mehrere aussteifende Querstreben 14 untereinander querverbunden. Nach einer in Richtung auf das Vorderrad des Fahrrades gelegenen Abkröpfung bei 15 und 16 gehen die beiden Längsstreben 11 und 12 einstückig in die quer zur Fahrradlängsachse verlaufende horizontale Querstrebe 13 einstückig über.

Die hinteren Enden der Längsstreben 11 und 12 sind bei 17 und 18 nach unten in Richtung auf die beiden Ausfallenden 8a und 8b umgebogen und bilden in diesem Bereich hintere Gepäckträgerstreben 19 und 21. Die Gepäckträgerstreben 19 und 21 sowie die Längsstreben 11 und 12 und die Querstrebe 13 werden durch entsprechendes Biegen eines vorzugsweise aus entsprechendem Aluminium bestehenden massiven Runddraht erzeugt.

Die Anbringung der Querstrebe 13 an der die beiden Hintergabelstreben 6a und 6b knapp unterhalb der Sitzkopfmuffe 5 verbindenden Strebe 9 erfolgt mittels eines in Fig. 2 vergrößert veranschaulichten Klemmstücks 22, das ebenfalls vorzugsweise aus einem nicht oder schwer korrodierenden Material, beispielsweise Aluminium besteht.

Das Klemmstück 22 enthält eine etwa rechteckige Platte 23, die mit ihrer längsten Erstreckung parallel zu der Strebe 9 verläuft und eine Länge, gemessen in Richtung der Strebe 9 aufweist, so daß sie zwischen die beiden Hintergabelstreben 6a und 6b paßt. Auf ihrer der Strebe 9 benachbarten Seite enthält die Platte 23 eine trapezförmige gerade Nut 24 mit in Richtung auf den Nutengrund zu schräg zulaufenden geraden Flanken 25 und 26. Die Nut 24 verläuft in Längsrichtung der Strebe 9 und umgreift diese im montierten Zustand teilweise längs deren Umfang, wie dies Fig. 2 zeigt.

Etwa in der Mitte der Platte 23 ist eine durch die Nut 24 verlaufende Querbohrung 27 angebracht, die mit einer entsprechenden Querbohrung in der Strebe 9 fluchtet und der Aufnahme einer Befestigungsschraube 28 dient, die mit ihrem Gewinde- und Schaftteil durch die Querbohrung 27 sowie die entsprechende Bohrung in der Strebe 9 hindurchgesteckt ist und an der Rückseite, bezogen auf Fig. 2, unter Zwischenlage einer Beilagscheibe 29 mittels einer Schraubenmutter 31 festgeschraubt ist. Auf dem Kopf der Befestigungsschraube 28 kann ein weiterer Bolzen 32 einstückig angeformt sein, auf dem in bekannter Weise die Backen der Felgenbremse gelagert sind. Mittels der Schraube 28 und der Schraubenmutter 31 wird das Klemmstück 22 an seiner im wesentlichen rechteckigen Platte an der Strebe 9 des Fahrzeugrahmens festgeschraubt. Die der Strebe 9 abliegende plane Seite der Platte 23 bildet gleichzeitig eine verbesserte Auflagefläche für die die Felgenbremse tragende Schraube 28.

An der nach oben weisenden Kante der rechtekigen Platte 23 sind zwei nach oben wegstehende Schenkel 33 und 34 einstückig angeformt, die zwischen sich eine Nut 35 begrenzen, die, wie Fig. 2 zeigt, im Querschnitt etwa U-förmig ist, wobei die Basis der Platte 23 zugekehrt ist. Die Weite der parallelflankigen Nut 35 entspricht dem Durchmesser der Querstrebe 13 des Gepäckträgers 2, so daß diese, wie gezeigt, in die Nut 35 einzulegen ist. Auch die beiden Schenkel 33 und 34 haben in Richtung parallel zu der Strebe 9 des Fahrzeugrahmens eine Länge, so daß sie zwischen die beiden Hintergabelstreben 6a und 6b passend, d.h. vorzugsweise eine Länge, die der Länge der rechtekigen Platte 23 enspricht, an die sie angeformt sind.

Beide Schenkel 33 und 34 enthalten jeweils zwei Bohrungen 36, 37, 38 und 39, die paarweise miteinander fluchten, d.h. es fluchtet die Bohrung 36 mit der Bohrung 39 und die Bohrung 37 mit der Bohrung 38, wobei die gemeinsamen Mittelachsen der paarweise miteinander fluchtenden Bohrungen 36, 39, 37, 38 rechtwinklig zu der Achse der Querstrebe 13 verlaufen.

Die Bohrung 36 und die Bohrung 37 dienen der Aufnahme eines zugehörigen kegelstumpfförmigen Andruckstücks 41 und 42, das mit seiner Spitze voran in die Bohrung 36 bzw. 37 eingesteckt ist und konzentrisch eine Gewindebohrung 43 bzw. 44 enthält. In die Gewindebohrungen 43 und 44 sind von dem anderen Schenkel 34 herkommend Befestigungsschrauben 46 und 47 her eingedreht, die durch die Bohrungen 38 und 39 in dem Schenkel 34 hindurchführen. Um eine möglichst glatte Oberfläche an der Außenseite des Schenkels 34 zu erhalten, sind die Bohrungen 38 und 39 angesenkt und die Besestigungsschrauben 46 und 47 als Senkschrauben, vorzugsweise als Inbussenkschrauben ausgebildet. Beim Anziehen der Befestigungsschrauben 46 und 47 werden die konus- oder kegelstumpfförmigen Andruckstücke 41 und 42, die zweckmäßigerweise an ihrem dickeren Ende einen zylindrischen konzentrischen Fortsatz 48 bzw. 49 tragen, in Richtung auf den Schenkel 34 gezogen, wobei sie sich mit ihrer Kegelmantelfläche an die Querstrebe 13 anlegen, während der zylindrische Teil 48 und 49 in den zylindrischen Bohrungen 36 und 37 bleibt. Entsprechend sind die Abmessungen der Bohrungen 36 bis 39 bzw. ihre Abstände von dem Grund der Nut 35 gewählt, so daß bei angezogenen Klemmschrauben 46 und 47 die konusförmigen Andruckstücke 48 und 49 die Querstrebe 13 zwischen den beiden Schenkeln 33 und 34 gegen den Grund der Nut 35 pressen, ohne daß die Andruckstücke 41 und 42 mit ihrem zylindrischen Abschnitt 48 und 49 aus den zugehörigen Bohrungen 36 und 37 freikommen können.

Das in Fig. 2 gezeigte Klemmstück 22 ermöglicht einerseits eine formschlüssige Verbindung sowohl mit dem Fahrzeugrahmen als auch mit dem Rahmen des Gepäckträgers 2. Die formschlüssige Verbindung mit dem Fahrzeugrahmen kommt über die Strebe 9 zustande, wozu das Klemmstück 22 eine Aufnahmeeinrichtung in Gestalt der Nut 24 in der Platte 23 enthält, die eine formschlüssige Verbindung hinsichtlich Kräften gewährleistet, die tangential zu der Achse der Bohrung 27 an dem Klemmstück 22 angreifen. Rechtwinklig dazu wird die formschlüssige Verbindung über die Gewindeschraube 28 erhalten.

Auch die Verbindung mit der Querstrebe 13 ist formschlüssig insofern, als diese in die Nut 35 zwischen den beiden Schenkeln 33 und 34 eingelegt ist und durch die Andruckstücke 41 und 42 gegen Verrutschen in ihrer Längsrichtung gesichert ist. Da sich darüber hinaus die Nut 35 mit ihrem oberen Schlitz in Richtung auf die oberen Enden der Hintergabelstreben 6a und 6b bzw. in Richtung auf die Sitzkopfmuffe 5 öffnet, wird bei einer Belastung des Gepäckträgers 2 die auftretende Kraft von dem Grund der Nut 35, d.h. der die beiden Schenkel 33 und 34 miteinander verbindenden Basis aufgenommen und unmittelbar über die Platte 23 in die Strebe 9 eingeleitet.

Infolge der Verwendung der randseitig offenen Nut 35, die in ihrer Weite an den Durchmesser der ansonsten unbearbeiteten Querstrebe 13 angepaßt ist, braucht die Querstrebe 13 keine Materialschwächungen aufzuweisen, die wegen der starken Erschütterungen bei Fahrrädern dauerbruchgefährdet sind.

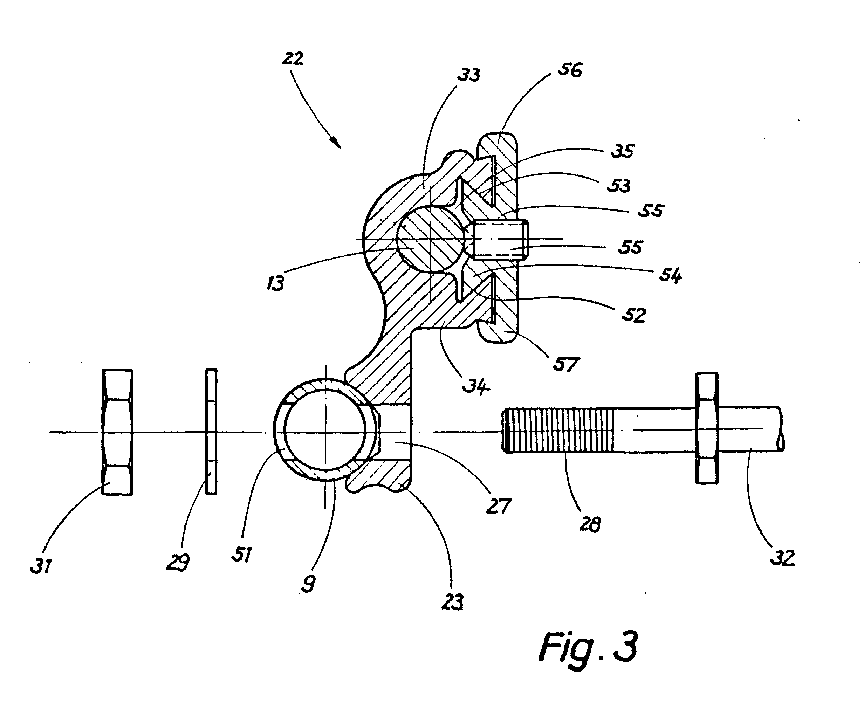

In Fig. 3 ist ein weiteres Ausführungsbeispiel des Klemmstücks 22 dargestellt, bei dem sich jedoch die von den Schenkeln 33 und 34 begrenzte Nut 35 nicht, wie vorher nach oben, sondern nach hinten, bezogen auf die Fahrradgeometrie, öffnet. Die Anbringung an der Strebe 9 des Fahrzeugrahmens erfolgt, wie vorher, mittels der rechteckigen Platte 23, durch die etwa mittig die Bohrung 27 hindurchführt, die, ebenfalls wie vorher, mit einer Bohrung 51 in der Strebe 9 fluchtet und der Aufnahme der Gewindeschraube 28 dient.

Die wiederum im Querschnitt U-förmige und mit der Weite an den Durchmesser der Strebe 13 angepaßte Nut 35 enthält in der Nähe ihres Schlitzes, d.h. in der Nähe der freien Enden der beiden Schenkel 33 und 34, zwei sich über die Länge der Nut 35 erstreckende Ausnehmungen oder Nuten 52 bzw. 53, die im gezeigten Beispiel dreieckigen Querschnitt haben. In diese sich bezüglich dar Mitte der Nut 35 gegenüberliegenden Ausnehmungen 52 und 53 ist ein entsprechenden schwalbenschwanzförmiges Paßstück 54, wie Fig. 3-zeigt, eingesetzt. Das Paßstück 54 hat eine Länge, gemessen senkrecht zur Zeichenebene, die der Breite des Klemmstücks 22 entspricht. Mittig in dem Paßstück 54, das zusammen mit den dreieckförmigen Ausnehmungen 52 und 53 eine Schwalbenschwanzpassung bildet, ist wenigstens eine Gewindebohrung 54 vorgesehen, die in Richtung auf den Grund der Nut 35 weist und damit parallel zu den Innenseiten der beiden Schenkel 33 und 34 verläuft. In der Gewindebohrung 54 sitzt eine Stiftschraube 55, die die Querstrebe 13 gegen den Grund der Nut 35 abstützt.

Um zu verhindern, daß bei einem Anziehen der Gewindeschraube 55 das schwalbenschwanzförmige Paßstück 54 die beiden Schenkel 33 und 34 auseinanderdrückt, sind an dem Paßstück 54 an seinem aus der Nut 35 herausragenden Teil hakenförmige Fortsätze 56 und 57 angeformt, die sich ebenfalls über die gesamte Länge der Nut 35 erstrecken und die beiden Schenkel 33 und 34 an ihren freien Enden zur Außenseite hin umgreifen. Wenn jetzt durch Anziehen der Klemmschraube 55 die beiden Schenkel 33 und 34 dazu neigen, sich auseinanderzubiegen, legen sie sich an der umgreifenden Innenseite der hakenförmigen Fortsätze 56 und 57 an, wodurch ihre Ausweitbewegung begrenzt ist.

Auch das Klemmstück 22 nach Fig. 3 ergibt ohne Materialschwächung an dem Rahmen des Gepäckträgers 2 eine formschlüssige Verbindung zwischen der Querstrebe 13 und der Strebe 9 des Fahrzeugrahmens.

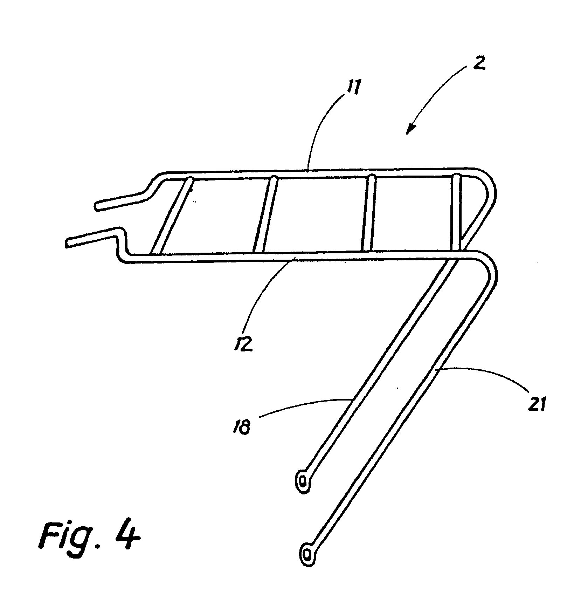

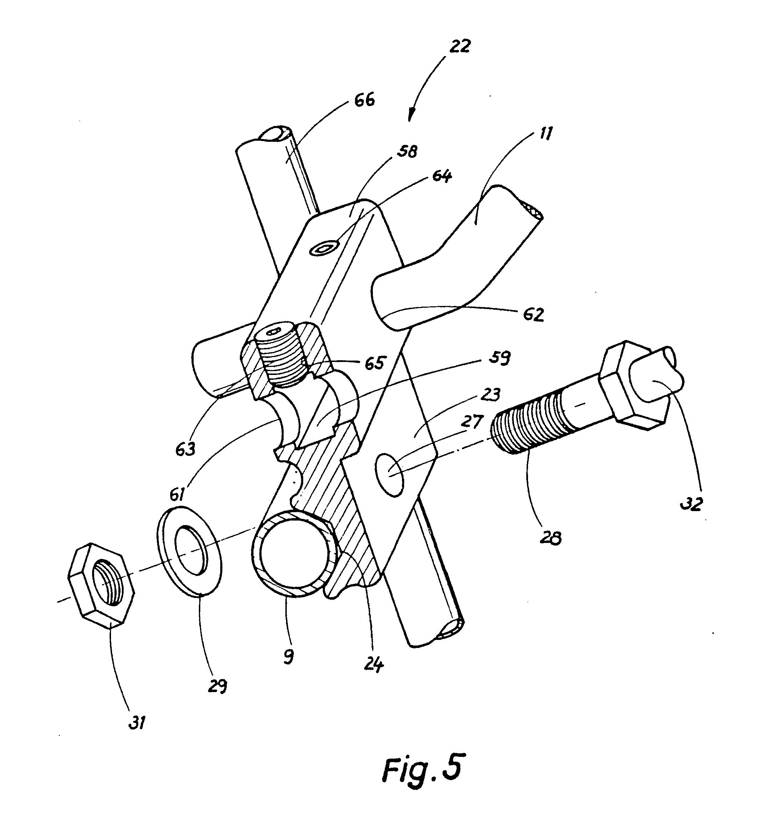

Neben den in Fig. 1 gezeigten Gepäckträgern 2, die stirnseitig eine Querstrebe 13 zur Halterung an den Hintergabelstreben aufweisen, gibt es noch die in Fig. 4 gezeigte Ausführungsform, bei der die nach vorne weisenden freien Enden der beiden Längsstreben 11 und 12 lediglich parallel zueinander nach innen abgekröpft und nicht durch eine Querstrebe miteinander verbunden sind. Zur Halterung eines solchen Gepäckträgers 2 an seinen beiden Längsstreben dient das in Fig. 5 gezeigte Klemmstück 22, das hinsichtlich der Anbringung an der Strebe 9 des Fahrzeugrahmens gleich wie die vorhergehenden Ausführungsbeispiele gestaltet ist. Einander entsprechende Bauelemente sind deshalb auch nicht erneut beschrieben und mit den gleichen Bezugszeichen versehen.

An der nach oben weisenden schmalen langen Kante der rechteckigen Platte 23, an der bei den Ausführungsbeispielen nach den Fig. 2 und 3 die beiden Schenkel 33 und 34 angeformt sind, ist bei Fig. 5 ein quaderförmiger Block 58 angeformt, der zur Gewichtsersparnis mit einer zu der Nut 24 parallellaufenden rechteckigen Durchgangsöffnung 59 versehen ist. Der Block 58 hat eine etwas größere Dicke als die Platte 23 und enthält zwei Durchgangsbohrungen 61 und 62, die parallel und mit Abstand zueinander verlaufen. Ihre Achsen sind rechtwinklig zu einer durch die Platte 23 definierten Ebene und damit auch rechtwinklig zu einer Ebene, die die Achse der Strebe 9 enthält. Die zylindrischen Bohrungen oder Öffnungen 61 und 62 nehmen, wie gezeigt, die freien Enden der Längsstreben 11 und 12 des Gepäckträgers nach Fig. 4 auf, d.h. die freien Enden sind in die Öffnungen 61 und 62 eingesteckt. Um die Längsstreben 11 und 12 in den Öffnungen 61 und 62 zu sichern, sind Stiftschrauben 63 und 64 vorgesehen. Diese sitzen in Gewindebohrungen 65 und 66, die von der Oberseite des quaderförmigen Blocks 58 in dessen Inneres hineinführen. Die Achsen der Bohrungen 65 und 66 schneiden die Achse der zugehörigen zylindrischen Öffnung 61 bzw. 62, so daß die eingedrehte Stiftschraube 63 oder 64 die entsprechende Längsstrebe 11 oder 12 in der zugehörigen Bohrung festklemmt.

Auch hierbei ergibt sich einerseits eine formschlüssige Verbindung des Klemmstücks 22 mit der Strebe 9 des Fahrzeugrahmens und andererseits eine formschlüssige Verbindung mit den Längsstreben 11 und 12 des Gepäckträgers 2, ohne daß wiederum Materialschwächungen vorgenommen werden müssen, da der Durchmesser der Öffnungen 61 und 62 an den Durchmesser bzw. den Querschnitt der beiden Längsstreben 11 und 12 angepaßt ist.

Durch geringfügiges Verschieben der Längsstreben 11 und 12 in den zugehörigen Öffnungen 61 und 62 des Klemmstücks 22 ist in begrenztem Maße eine nachträgliche Justierung des Gepäckträgers 2 möglich bzw. umgekehrt läßt sich eine bestimmte Gepäckträgergeometrie an unterschiedlichen Fahrzeugrahmen verwenden.

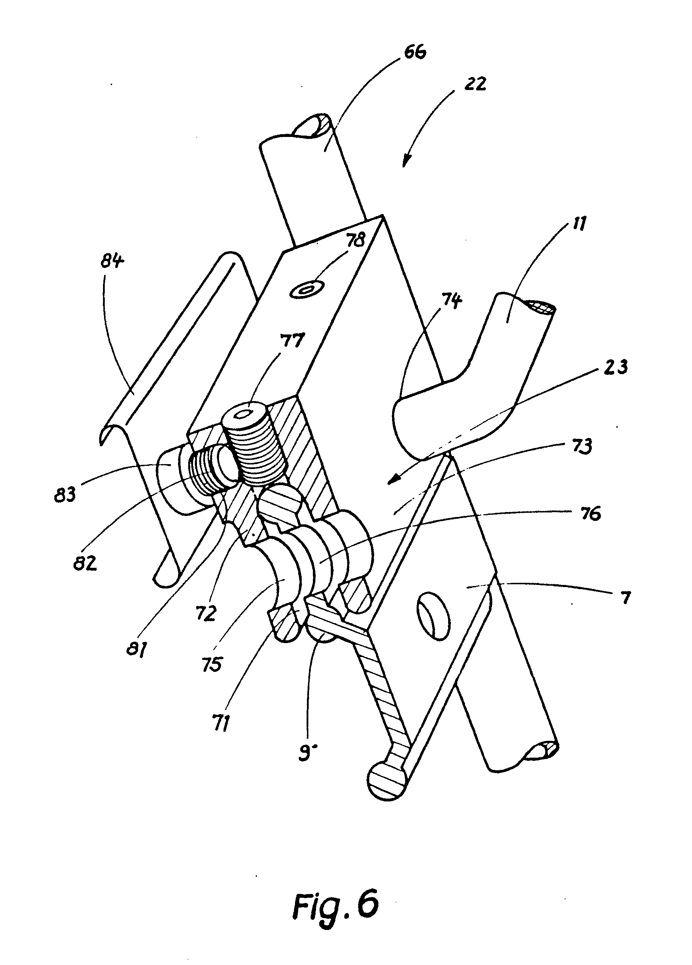

Falls die beiden Hintergabelstreben 6a und 6b durch eine plattenförmige Strebe 9' miteinander verbunden sind, läßt sich vorteilhafterweise das in Fig. 6 gezeigte Klemmstück 22 einsetzen. Dieses Klemmstück 22 hat etwa quaderförmige Gestalt und enthält an seiner Unterseite eine über seine gesamte Länge sich erstreckende schlitzförmige und im Querschnitt U-förmige Nut 71, derart, daß hierdurch wiederum zwei zueinander parallele nach unten weisende Schenkel 72 und 73 entstehen. Mit der so begrenzten Nut 71 ist das Klemmstück 22 auf die plattenförmige Strebe 9' aufgesteckt, etwa bis die plattenförmige Strebe 9' mit ihrer Oberkante am Grund der Nut 71 anliegt.

Durch das Klemmstück 22 verlaufen im Bereich der beiden Schenkel 72 und 73 zwei zueinander parallele Bohrungen 74 und 75, die mit entsprechenden Bohrungen in der plattenförmigen Strebe 9' fluchten. Aus Darstellungsgründen ist von den Bohrungen in der Strebe 9' lediglich die Bohrung 76 erkennbar.

In die Bohrungen 74 und 75, die in ihrem Querschnitt an den Querschnitt der Längsstreben 11 und 12 angepaßt sind, sind, ähnlich wie bei dem Ausführungsbeispiel nach Fig. 5, die parallel zueinander abgekröpften Längsstreben 11 und 12 eingesteckt. Die Arretierung der Längsstreben 11 und 12 in dem Klemmstück 22 erfolgt mittels Stiftschrauben 77 und 78, die von der Oberseite des Klemmstücks 22 her in entsprechende Gewindebohrungen eingedreht sind, die durch den Grund der Nut 71 hindurchlaufen und deren Achse vorzugsweise die Achse der zugehörigen Durchgangsbohrung 74 oder 75 schneidet. Die in diese Gewindebohrungen eingedrehten Klemmschrauben 77 und 78 legen sich beim Anziehen an die obere Kante der plattenförmigen Strebe 9' an und sind bestrebt, das Klemmstück 22 gegenüber dieser Platte 9' anzuheben. Da in den Bohrungen 74 und 75 jedoch die Längsstreben 11 und 12 eingesteckt sind, die auch durch die entsprechend bemessenen Bohrungen in der Strebe 9' hindurchführen, wird das Klemmstück 22 gegen die Strebe 9' verspannt, wobei gleichzeitig die Längsstreben 11 und 12 zwischen dem Klemmstück 22 und der Strebe 9' verklemmt werden.

Ein aus dem Klemmstück 22 nach unten herausschauender Abschnitt 79 der Strebe 9' dient in bekannter Weise der Anbringung einer Felgenbremse.

Bei dem Ausführungsbeispiel nach Fig. 6 ist außerdem an dem Klemmstück 22 eine Befestigungsfläche für eine Werkzeugdose oder einen Akkumulator vorgesehen. Diese Befestigungsfläche befindet sich auf der Vorderseite des Klemmstücks 22, in der zwei zueinander parallele Bohrungen, die rechtwinklig zu den Bohrungen für die Klemmschrauben 77 und 78 verlaufen, angebracht sind. Aus Darstellungsgründen ist von diesen Gewindebohrungen lediglich die Gewindebohrung 81 erkennbar. In den Gewindebohrungen 81 ist eine Gewindeschraube 82 eingedreht, mit der über einen Distanzring 83 eine Aufnahmeplatte 84 an dem Klemmstück 22 angeschraubt ist.

## Ansprüche

1. Befestigungseinrichtung zum Verbinden eines Fahrradgepäckträgers (2) mit einem Fahrzeugrahmen (1) eines Fahrrades, der zwei durch eine Querstrebe (9) verbundene Hintergabelstreben aufweist, während der Gepäckträger (2) einen seine Gepäckauflagefläche umfassenden Rahmen mit zwei Längsstreben (11, 12) und wenigstens einer Querstrebe (13) enthält, und an seiner Querstrebe (13) oder seinen beiden Längsstreben (11, 12) an dem Fahrzeugrahmen (1) befestigt ist, dadurch gekennzeichnet, daß sie ein zwischen dem Fahrzeugrahmen (1) und dem Rahmen (11, 12, 13) des Gepäckträgers (2) anzuordnendes Klemmstück (22) aufweist, das mit einer Ausnehmung (35, 71) und/oder wenigstens einer Öffnung (61, 62, 74, 75) zur formschlüssigen Aufnahme von wenigstens einer strebe (11, 12, 13) des Rahmens (11, 12, 13) des Gepäckträgers (2) versehen ist, daß der Ausnehmung (35, 71) oder der wenigstens einen Öffnung (61, 62, 74, 75) lösbare Klemmittel (41, 42, 55, 63, 64, 77, 78) für die wenigstens eine Strebe (11, 12, 13) des Gepäckträgers (2) zugeordnet sind und daß das Klemmstück (22) eine Aufnahmeeinrichtung (24, 71) zur formschlüssigen Halterung an der Querstrebe (9, 9') des Fahrzeugrahmens (1) aufweist.

2. Befestigungseinrichtung nach Anspruch 1, dadurch gekennzeichnet, daß die Aufnahmeeinrichtung (23) eine Nut (24, 71) enthält, die parallel zu der Querstrebe (9, 9') des Fahrzeugrahmens (1) verläuft und in die die Querstrebe (9, 9') des Fahrzeugrahmens (1) einlegbar ist.

3. Befestigungseinrichtung nach Anspruch 1, dadurch gekennzeichnet, daß die Aufnahmeeinrichtung (23) plattenförmige Gestalt aufweist.

4. Befestigungseinrichtung nach Anspruch 3, dadurch gekennzeichnet, daß die Aufnahmeeinrichtung (23) eine Querbohrung (27) enthält, die mit einer zugehörigen Bohrung (51) in der Querstrebe (9) des Fahrzeugrahmens (1) fluchtet und durch die im montierten Zustand eine Befestigungsschraube (28) hindurchführt.

5. Befestigungseinrichtung nach Anspruch 1, dadurch gekennzeichnet, daß das Klemmstück (22) vorzugsweise im Bereich der Aufnahmeeinrichtung (23) eine Fläche zur Anbringung einer Felgenbremse trägt.

6. Befestigungseinrichtung nach Anspruch 5, dadurch gekennzeichnet, daß die Fläche für die Felgenbremse der Nut (24) für die Querstrebe (9) des Fahrzeugrahmens (1) gegenüberliegt.

7. Befestigungseinrichtung nach Anspruch 1, dadurch gekennzeichnet, daß das Klemmstück (22) zwei zueinander parallele Schenkel (33, 34) aufweist, die zwischen sich eine längs der Breite des Klemmstücks (22) verlaufende Nut (35) begrenzen, die die Ausnehmung (35) für die Strebe (13) des Gepäckträgers bildet und die tiefer ist als die Erstreckung der eingelegten Strebe (13) in Richtung auf den Grund der Nut (35), und daß die Klemmittel zwischen den freien Enden der Schenkel (33, 34) und der eingelegten Strebe (13) vorgesehen sind.

8. Befestigungseinrichtung nach Anspruch 7, dadurch gekennzeichnet, daß die Nut (35) in der Nähe ihres Randes in ihren beiden Flanken parallel zu der Längserstreckung der Nut und zu dem Grund der Nut (35) verlaufende Ausnehmungen (52, 53) enthält, in die ein Paßstück (54) einschiebbar ist, das wenigstens eine in Richtung auf den Grund der Nut (35) weisende Gewindebohrung (55') für eine Klemmschraube (55) enthält.

9. Befestigungseinrichtung nach Anspruch 8, dadurch gekennzeichnet, daß das Paßstück (54) im Querschnitt hakenförmige seitliche Fortsätze (56, 57) aufweist, die seitlich um den Rand der Nut (35) herum die Schenkel (33, 34) von außen greifen und beim Anziehen der Klemmschraube (55) ein Aufweiten der Nut (35) verhindern.

10. Befestigungseinrichtung nach Anspruch 8, dadurch gekennzeichnet, daß das Paßstück (54) schwalbenschwanzförmig ist und die Ausnehmungen (52, 53) daran angepaßt sind.

11. Befestigungseinrichtung nach Anspruch 7, dadurch gekennzeichnet, daß in den Schenkeln (33, 34) wenigstens zwei miteinander fluchtende Durchgangsöffnungen (36, 39; 37, 38) enthalten sind, in denen die Klemmittel (41, 42, 46, 47) sitzen, durch die die Strebe (13) des Gepäckträgers (2) an den Grund der Nut (35) anpreßbar ist.

12. Befestigungseinrichtung nach Anspruch 11, dadurch gekennzeichnet, daß in der einen (36, 37) der wenigstens zwei miteinander fluchtenden Durchgangsöffnungen (36, 39, 37, 38) ein keil- oder konusförmiges Andruckstück (41, 42) sitzt, in das eine durch die andere (38, 39) der beiden Öffnungen (36, 39; 37, 38) eingeführte Anzugschraube (46, 47) eingedreht ist, mit der das Andruckstück (41, 42) mit seinem verjüngten Ende voraus gegen den anderen Schenkel (34) anziehbar ist.

13. Befestigungseinrichtung nach Anspruch 7, dadurch gekennzeichnet, daß sich die Nut (35) in Richtung von der Querstrebe (9) des Fahrzeugrahmens (1) weg öffnet.

14. Befestigungseinrichtung nach Anspruch 1, dadurch gekennzeichnet, daß das Klemmstück (22) zwei parallelachsige Öffnungen (61, 62) enthält, in die die Längsstreben (11, 12) des Gepäckträgers (2) einsteckbar sind, und daß die Klemmittel von zwei Klemmschrauben (63, 64) gebildet sind, die in zugehörige, die Öffnungen (61, 62) für die Längsstreben (11, 12) zumindest anschneidende Gewindebohrungen (65, 66) eindrehbar sind.

15. Befestigungseinrichtung nach Anspruch 1, dadurch gekennzeichnet, daß das Klemmstück (22) zwei zueinander parallele Schenkel (72, 73) aufweist, die zwischen sich eine längs der Breite des Klemmstücks (22) verlaufende Nut (71) begrenzen, die die Aufnahmeeinrichtung (23) für die Strebe (9') des Fahrzeugrahmens (1) bildet.

16. Befestigungseinrichtung nach Anspruch 15, dadurch gekennzeichnet, daß in dem Klemmstück (22) im Bereich der beiden parallel zueinander verlaufenden Schenkel (72, 73) zwei Durchgangsöffnungen (74, 75) vorgesehen sind, die der Aufnahme der beiden Längsstreben (11, 12) des Gepäckträgers (2) dienen, und daß sich zwischen dem Grund der Nut (71) und den Öffnungen (74, 75) für die Längsstreben (11, 12) wenigstens ein Abschnitt der Strebe (9') des Fahrzeugrahmens (1) befindet.

17. Befestigungseinrichtung nach Anspruch 16, dadurch gekennzeichnet, daß das Klemmstück (22) zwei Gewindebohrungen enthält, die durch den Grund der Nut (71) verlaufen, und daß in die Gewindebohrungen Klemmschrauben (77, 78) eindrehbar sind, die sich im eingeschraubten Zustand an die Querstrebe (9') des Fahrzeugrahmens (1) anlegen.

18. Befestigungseinrichtung nach Anspruch 16, dadurch gekennzeichnet, daß die vorzugsweise abgeflachte Querstrebe (9') des Fahrzeugrahmens (1) zwei mit den Öffnungen (74, 75) in den Schenkeln (72, 73) fluchtende Öffnungen (76) enthält.

**Claims**

1. An attaching device for connecting a bicycle luggage rack (2) to a bicycle frame (1) having two rear fork struts interconnected via a cross-strut (9), while the luggage rack (2) comprises a frame engaging around its luggage bearing surface and having two longitudinal struts (11, 12) and at least one cross-strut (13) and is attached to the bicycle frame (1) via its cross-strut (13) or its two longitudinal struts (11, 12), characterized in that the attaching device has a clamping member (22) which is to be disposed between the bicyle frame (1) and the frame (11, 12, 13) of the luggage rack (2) and is formed with a recess (35, 71) and/or at least one opening (61, 62, 74, 75) for the positive reception of at least one strut (11, 12, 13) of the frame (11, 12, 13) of the luggage rack (2); releasable clamping means (41, 42, 55, 63, 64, 77, 78) for at least one strut (11, 12, 13) of the luggage rack (2) are associated with the recess (35, 71) or at least one opening (61, 62, 74, 75); and the clamping member (22) has a receiving device (24, 71) for positive retention on the cross-strut (9, 9') of the bicycle frame (1).

2. An attaching device according to claim 1, characterized in that the receiving device (23) comprises a groove (24, 71) which extends parallel with the cross-strut (9, 9') of the bicycle frame (1) and into which the cross-strut (9, 9') of the bicycle frame (1) can be inserted.

3. An attaching device according to claim 1, characterized in that the reciving device (23) is plate-shaped.

4. An attaching device according to claim 3, characterized in that the receiving device (23) comprises a transverse bore (27) which is aligned with an associated bore (51) in the cross-strut (9) of the bicycle frame (1) and through which in the assembled condition an attaching screw (28) extends.

5. An attaching device according to claim 1, characterized in that the clamping member (22) preferably bears in the zone of receiving device (23) a surface for the application of a rim brake.

6. An attaching device according to claim 5, characterized in that the surface for the rim brake is disposed opposite the groove (25) for the cross-strut (9) of the bicycle frame (1).

7. An attaching device according to claim 1, characterized in that the clamping member (22) has two parallel arms (33, 34) bounding between themselves a groove (35) which extends along the width of the clamping member (22) and forms the recess (35) for the strut (13) of the luggage rack and which is deeper than the distance to which the inserted strut (13) extends in the direction of the bottom of the groove (35), and the clamping means are provided between the free ends of the arms (33, 34) and the inserted strut (13).

8. An attaching device according to claim 7, characterized in that adjacent its edge the groove (35) comprises in both its flanks recesses (52, 53) which extend parallel with the longitudinal extension of the groove (35) and the bottom thereof and into which a fitting piece (54) can be inserted which comprises for a clamping screw (55) at least one screwthreaded bore (55') pointing in the direction of the bottom of the groove (35).

9. An attaching device accordig to claim 8, characterized in that the fitting piece (54) has lateral extensions (56, 57) hook-shaped in cross-section which grip the arms (33, 34) laterally from outside around the edge of the groove (35) and prevent the groove (35) from being opened up when the clamping screw (55) is tightened.

10. An attaching device according to claim 8, characterized in that the fitting piece (54) is dovetail-shaped and the recesses (52, 52) are adapted thereto.

11. An attaching device according to claim 7, characterized in that the arms (33, 34) are formed with at least two aligned passage openings (36, 39;37, 38) in which the clamping means (41, 42, 46, 47) are disposed via which the strut (13) of the luggage rack (2) can be pressed against the bottom of the groove (35).

12. An attaching device according to claim 11, characterized in that disposed in one (36, 37) of the at least two aligned passage openings (36, 39, 37, 38) is a wedge-shaped or conical contact pressure member (41, 42) into which a retaining screw (46, 47) introduced through the other (38, 39) of the two openings (36, 39;37, 38) is screwed by means of which the contact pressure screw (41, 42) can be tightened with its tapered end leading against the other arm (34).

13. An attaching device according to claim 7, characterized in that the groove (35) opens in the direction away from the cross-strut (9) of the bicycle frame (1).

14. An attaching device according to claim 1, characterized in that the clamping member (22) comprises two axis-parallel openings (61, 62) into which the longitudinal struts (11, 12) of the luggage rack (2) can be inserted, and the clamping means are formed by two clamping screws (63, 64) which can be screwed into associated screwthreaded bores (65, 66) at least partly intersecting openings (61, 62) for the longitudinal struts (11, 12).

15. An attaching device according to claim 1, characterized in that the clamping member (22) has two parallel arms (72, 73) bounding between themselves a groove (71) which extends along the width of the clamping member (22) and forms the receiving device (23) for the strut (9') of the bicycle frame (1).

16. An attaching device according to claim 15, characterized in that in the zone of the two arms (72, 73) extending in parallel the clamping member (22) is formed with two passage openings (74, 75) which receive the two longitudinal struts (11, 12) of the luggage carrier (2), and at least a portion of the strut (9') of the bicycle frame (1) is disposed between the bottom of the groove (71) and the openings (74, 75) for the longitudinal struts (11, 12).

17. An attaching device according to claim 16, characterized in that the clamping member (22) comprises two screwthreaded bores extending through the bottom of the groove (71), and clamping screws (77, 78) which in the screwed-in state bear against the cross-strut (9') of the bicycle frame (1) can be screwed into the screwthreaded bores.

18. An attaching device according to claim 16, characterized in that the preferably flattened cross-strut (9') of the bicycle frame (1) comprises two openings (76) aligned with the openings (74, 75) in the arms (72, 73).

**Revendications**

1. Dispositif de fixation pour la fixation d'un porte-bagages (2) sur un cadre (1) d'une bicyclette, qui comporte deux haubans de fourche arrière reliés entre eux par une entretoise (9), tandis que le porte-bagages (2) comporte un cadre entourant sa surface de pose de bagages comportant deux barres longitudinales (11, 12) et au moins une barre transversale (13) et est fixé par sa barre transversale (13) ou ses deux barres longitudinales (11, 12) sur le cadre (1), caractérisé en ce qu'il présente un élément de fixation (22) disposé entre le cadre (1) de la bicyclette et le cadre (11, 12, 13) du porte-bagages (2) qui est muni d'un évidement (35, 71) et/ou d'au moins une ouverture (61, 62, 74, 75) pour la liaison positive d'une barre (11, 12, 13) du cadre (11, 12, 13) du porte-bagages (2), en ce que des moyens de blocage démontables (41, 42, 55, 63, 64, 77, 78) pour au moins une barre (11, 12, 13) du porte-bagages (2) sont associés à l'évidement (35, 71) ou à au moins une ouverture (61, 62, 74, 75), et en ce que l'élément de fixation (22) présente un dispositif de réception (24, 71) pour un montage positif sur l'entretoise (9, 9') du cadre de bicyclette (1).

2. Dispositif de fixation selon la revendication 1, caractérisé en ce que le dispositif de réception (23) comporte une gorge (24, 71), qui s'étend parallèlement à l'entretoise (9, 9') du cadre de bicyclette (1) et dans laquelle s'engage l'entretoise (9, 9') du cadre (1).

3. Dispositif de fixation selon la revendication 1, caractérisé en ce que le dispositif de réception (23) est en forme de plaque.

4. Dispositif de fixation selon la revendication 3, caractérisé en ce que le dispositif de réception (23) comporte un perçage transversal (27) qui est aligné avec un perçage (51) correspondant dans l'entretoise (9) du cadre et dans lequel s'engage, à l'état monté, une vis de fixation (28).

5. Dispositif de fixation selon la revendication 1, caractérisé en ce que l'élément de fixation (22) comporte de préférence dans la zone du dispositif de réception (23) une surface pour le montage d'un frein à machoîres.

6. Dispositif de fixation selon la revendication 5, caractérisé en ce que la surface pour le frein à machoîres est située à l'opposée de la gorge (24) pour l'entretoise (9) du cadre (1).

7. Dispositif de fixation selon la revendication 1, caractérisé en ce que l'élément de fixation (22) comporte deux ailes (33, 34) parallèles entre elles, qui définissent entre elles une gorge (35) s'étendant sur la largeur de l'élément de fixation (22), qui forme l'évidement (35) pour la barre transversale (13) du porte-bagages et dont la profondeur est supérieure à la dimension de la barre transversale (13) en direction du fond de la gorge (35) et en ce que les moyens de blocage sont prévus entre les extrémités libres des ailes (33, 34) et la barre transversale (13) engagée dans la gorge.

8. Dispositif de fixation selon la revendication 7, caractérisé en ce que la gorge (35) comporte à proximité de son bord des évidements (52, 53) dont les flancs s'étendent parallèlement à l'axe longitudinal de la gorge et au fond de la gorge (35), dans lesquels s'engage un élément ajusté (54), qui comporte au moins un trou taraudé (55') pour une vis de blocage (55) orientée en direction du fond de la gorge (35).

9. Dispositif de fixation selon la revendication 8, caractérisé en ce que l'élément ajusté (54) comporte des prolongements latéraux (56, 57) dont la section a une forme de crochets, qui saisissent par l'extérieur les ailes (33, 34) latéralement sur le bord de la gorge (35) et empêchent une ouverture de la gorge (35) lors du serrage de la vis de blocage (55).

10. Dispositif de fixation selon la revendication 8, caractérisé en ce que l'élément ajusté (54) a une forme en queue d'aronde et les logements (52, 53) sont adaptés en conséquence.

11. Dispositif de fixation selon la revendication 7, caractérisé en ce que les ailes (33, 34) comportent au moins deux trous débouchants alignés entre eux (36, 39 ; 37, 38) dans lesquels s'engagent des moyens de blocage (41, 42, 46, 47) qui permettent de presser la barre transversale (13) du porte-bagages (2) sur le fond de la gorge (35).

12. Dispositif de fixation selon la revendication 11, caractérisé en ce qu'une pièce de pression (41, 42) en forme de coin ou en forme de cône est montée dans l'un (36, 37) des au moins deux trous de passage (36, 39, 37,38) alignés entre eux, une vis de serrage (46, 47) engagée dans l'autre (38, 39) des deux ouvertures (36, 39 ; 37, 38) étant vissé dans la pièce de pression, à l'aide de laquelle la pièce de pression (41, 42) est serrée avec son extrémité rétrécie en direction de l'autre aile (34).

13. Dispositif de fixation selon la revendication 7, caractérisé en ce que la gorge (35) est ouverte en direction de l'entretoise (9) du cadre de bicyclette (1).

14. Dispositif de fixation selon la revendication 1, caractérisé en ce que l'élément de fixation (22) comporte deux ouvertures (61, 62) dont les axes sont parallèles, dans lesquels peuvent s'engager les barres longitudinales (11, 12) du porte-bagages (2) et en ce que les moyens de blocage sont constitués par deux vis de blocage (63, 64) qui se vissent dans des trous taraudés (65, 66) correspondants au moins partiellement sécants avec les ouvertures (61, 62) pour les barres longitudinales (11, 12).

15. Dispositif de fixation selon la revendication 1, caractérisé en ce que l'élément de fixation (22) présente deux ailes (72, 73) parallèles entre elles qui délimitent entre elles une gorge (71) s'étendant sur la longueur de l'élément de fixation (22), qui forme le dispositif de réception (23) pour l'entretoise (9') du cadre (1).

16. Dispositif de fixation selon la revendication 15, caractérisé en ce que deux trous débouchants (74, 75) sont prévus dans l'élément de fixation (22) dans la zone des deux ailes (72, 73) parallèles entre elles, lesdits trous de passage reçevant les deux barres longitudinales (11, 12) du porte-bagages (2) et en ce que au moins une partie de l'entretoise (9') du cadre (1) se trouve entre le fond de la gorge (71) et les ouvertures (74, 75) pour les barres longitudinales (11, 12).

17. Dispositif de fixation selon la revendication 16, caractérisé en ce que l'élément de fixation (22) comporte deux trous taraudés qui traversent le fond de la gorge (71) et en ce que des vis de blocage (77, 78) sont vissées dans les trous taraudés et prennent appui à l'état vissé sur l'entretoise (9') du cadre (1).

18. Dispositif de fixation selon la revendication 16, caractérisé en ce que l'entretoise (9'), de préférence plate, du cadre (1) comporte deux ouvertures (76) alignées avec les ouvertures (74, 75) dans les ailes (72, 73).

Fig. 1

Fig. 2

Fig. 3

Fig. 4

Fig.5

Fig. 6